# EUROPEAN PATENT SPECIFICATION

(11) **EP 0 961 216 B1**
(45) Date of publication and mention of the grant of the patent: **14.06.2006**
(21) Application number: 99200839.1
(22) Date of filing: 17.03.1999
(51) Int. Cl.: G06K 7/00, G06K 19/07, G06F 11/273, G01R 31/00, G06K 19/077

(54) **IC card-based test apparatus and method**
Chipkartenbasierendes Prüfverfahren und Vorrichtung
Méthode et appareil de test fondé sur une carte à circuit intégré

(30) Priority: 26.05.1998 IL 12465598
(43) Date of publication of application: 01.12.1999
(73) Proprietor: NDS LIMITED, West Drayton, Middlesex UB7 ODQ (GB)
(72) Inventor: Adler, Michael, Hashmonaim 73127 (IL)
(74) Representative: White, Duncan Rohan

(56) References cited:
- DE-A- 19 542 262
- FR-A- 2 737 794

## Description

### FIELD OF THE INVENTION

The present invention relates to an IC card-based test apparatus and method, and more particularly but not exclusively to the use of an IC card or the like for testing channel decoder apparatus.

### BACKGROUND OF THE INVENTION

In the field of satellite and cable broadcasting it is well-known to provide pay channels that are only made available to viewers who have paid a subscription. The channel itself is transmitted in scrambled form. The viewer is provided with decoding equipment as part of the receiver apparatus that he is provided with upon signing up. Upon payment of the subscription the viewer is provided with a smart card that contains key information enabling the channel to be descrambled for the period of time covered by the subscription. Such an arrangement is known as a conditional access system.

In order to implement such a conditional access system it is necessary to provide a defined interface between the smart card and the decoding equipment. The interface requires the decoding apparatus to operate within certain limits as defined by a specification. There are numerous interface standards in use, for example ISO, NDC (NDS), EMV and GSM. The decoding apparatus itself may be made by manufacturers not in any way associated with the makers of the smart cards. The decoding apparatus is usually made with interface parameters that lie within tolerances defined by the specification but sometimes some of the parameters are slightly out. Generally only a small number of features are marginally outside the specified tolerance with the result that the apparatus will work with most smart cards but not with all. This makes the apparatus very hard to test for all circumstances and very annoying for customers who find that their apparatus works well for several months and then fails following acquisition of a new smartcard.

In general smartcards that are used in security applications are fast turnaround products due to the frequent need to replace some part of the security system, change a key or the like. The cards are thin and thus the chips inside are relatively hard to protect from damage. Therefore a great deal of research has gone in to smart card design. Smart card technology improves rapidly yet it is important that new, updated, smartcards remain compatible with old decoder boxes. In practice different generations of smartcard, as well as different batches of cards of the same generation, have different levels of tolerance to decoder box aberrations from specified ranges of signal parameters.

### SUMMARY OF THE INVENTION

DE-A-19542262 discloses a test device for testing a smart card interface comprising a smart card front end configured for insertion into a smart card interface; a smart card input/output pad disposed on said smart card front end configured for interfacing with a smart card interface; a smart card chip electronically connected to said smart card input/output pad.

The present invention is characterised in that said smart card chip is configured for performing a smart card interaction mimicking a smart card to be used with a particular smart card interface, said smart card interaction including receiving a response from a smart card interface; and a measurement and processing arrangement configured for determining a measurement of said response from a smart card interface; and comparing said measurement to specified design parameters of a smart card interface.

The measurement and processing arrangement may be configured for terminating said smart card interaction between said smart card chip and the smart card interface when said measurement lies outside of the specified design parameters.

The measurement may be a measurement of at least one of a high level and a low level of said response.

The measurement may be a measurement of at least one of a rise time and a fall time of said response.

The device may further comprise a display for displaying information indicative of the result of comparing said measurement to said specified design parameters.

The display may be configured for indicating at least one of success and failure of the smart card interface to operate within the specified design parameters.

The display includes at least one light emitting diode.

The device may further comprise an output interface operationally connected to said measurement and processing arrangement, said output interface being configured for outputting the result of said comparing to a computer.

The invention also provides a method for testing a smart card interface with a test device, the test device having a smart card chip, the method comprising the steps of, inserting the test device into the smart card interface; performing a smart card interaction with the smart card interface, said smart card interaction including receiving a response from the smart card interface; determining a measurement of said response; comparing said measurement to the specified design parameters of the smart card interface; and performing an action based on a result of said comparing.

### BRIEF DESCRIPTION OF THE DRAWINGS

For a better understanding of the invention and to show how the same may be carried into effect, reference will now be made, purely by way of example, to the accompanying drawings in which,
Figure 1 shows a general block diagram of a device according to the invention and of a decoder to be measured by the device;
Figure 2 shows an oscillogram of a signal output by a decoder device;
Figure 3 is a block diagram of circuitry for measuring parameters of the signal of figure 2;
Figure 4 shows a further oscillogram of the signal in figure 2; and
Figure 5 is a block diagram of circuitry for measuring parameters of the signal shown in figure 4.

### DESCRIPTION OF THE PREFERRED EMBODIMENTS

The general principle of the invention is that a zero tolerance, or worst case, smart card that has all of the functions of a standard smart card as handed out to customers, can be used to operate decoders in the normal manner. Because it is zero tolerance, any decoder that is even marginally out of spec in any vital parameter may fail the test and be discarded. Only those machines able to work with any smart card are thus likely be released onto the market.

In accordance with the present invention the smart card does not work like a standard test device. A standard test device connects to test pins on an IC and outputs signals that operate test circuits on the IC. The output signals generated are tested for their integrity and from this conclusions are drawn as to the circuit as a whole. The principle behind the present invention does not use test pins. Rather the circuit to be tested is operated in the normal way and monitoring is carried out of the standard in-use outputs.

Indeed the current practice in the field of conditional access devices is to test every pin on the IRD. This is expensive and time-consuming but is currently seen as unavoidable if satisfactory operation of the system is to be guaranteed. Furthermore it does not predict the interaction of the decoder device and the chip.

It is pointed out that at present it takes around six hours for a qualified technician to test an IRD by hand. With the very latest automated equipment the test time can be reduced to around ten minutes. With embodiments of the present invention the test time is reduced to the normal interaction time of the smart card with the interface, that is to say around a few seconds. This is because, as explained, the present invention does not seek to test all of the functions and all of the inputs and outputs of the IRD. Rather it simply carries out the normal smart card interaction, receives the normal IRD responses and measures the responses against its prestored standards.

However, as the present invention demonstrates, if a worst-case smart card can successfully operate the device then it ceases to be necessary to check every single pin. Every other smart card that operates properly within the parameters set for the smart card should be able to operate the device.

As will be discussed below, the worst case smart card of the invention can be a standalone card or it can be built integrally with the electronics needed to test the successful operation of the decoder.

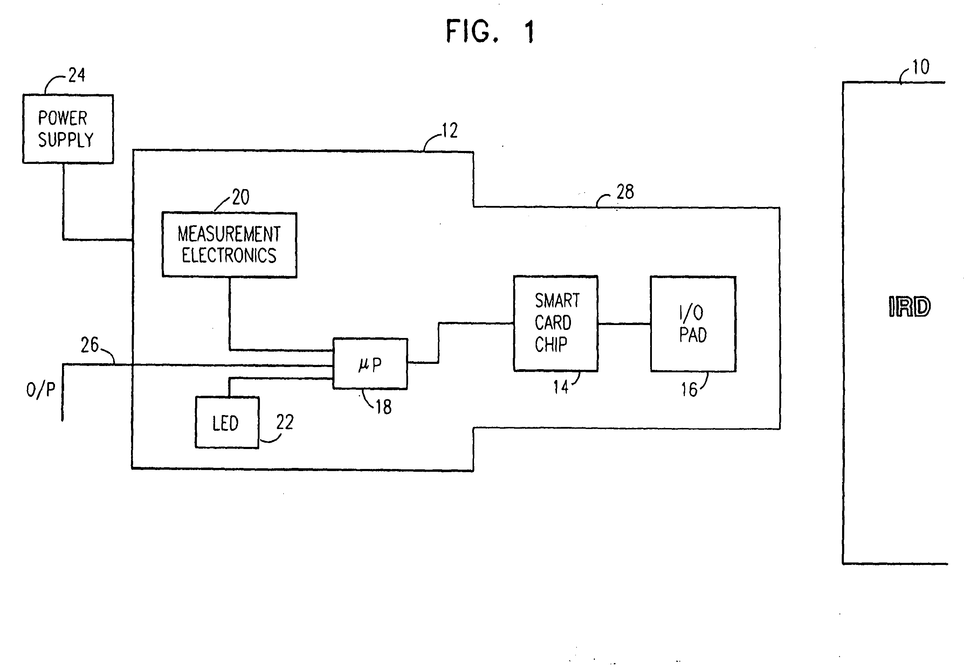

Figure 1 is a block diagram of an embodiment operative in accordance with the present invention. Figure 1 shows an integrated receiver decoder (IRD) 10 to be tested for compliance with the relevant standards. A worst case smart card is incorporated into a test device 12. The test device 12 comprises a smart card chip 14 and standard I/O pad 16 which together provide a standard smart card interface for the IRD 10. A micro-processor 18 controls the smart card chip 14 and various other circuits in the test device 12. The various other circuits in the device include measurement electronics 20 operable to carry out measurements on output signals from the IRD 10.

An LED (or similar) display 22 may optionally be provided to display device status information, error information or the like. Power is preferably made available from an external power supply but may be internal in some embodiments. An output 26 allows the device to be connected to a computer or the like. The output allows detailed diagnostic information that cannot be shown on the LED display 22, to be obtained.

The front end 28 of the device 12 is shaped like a smart card so that it can be slotted directly into the smart card receiver slot (not shown) of the IRD 10.

The device 12 is inserted, using its front end 28, into the IRD 10. It passes the information needed to enable the IRD 10 to start working and selectively measures outputs. That is to say it behaves to the IRD as a mimic of the real smartcard and measures outputs in the background to determine whether the outputs are within spec. If the outputs are outside the specification then the device 12 refuses to work.

Examples of the features that can be measured include the duty cycle of the IRD. The duty cycle is specified in many of the interface specifications as having to be between 45% and 55%. The majority of smartcards will work with an IRD having a duty cycle that lies within the larger range of 40% to 60%, but a minority will not. Embodiments of the invention can be used to measure the duty cycle and exclude those machines that may cause a minority of smart cards to fail because of the excessive width of the duty cycle.

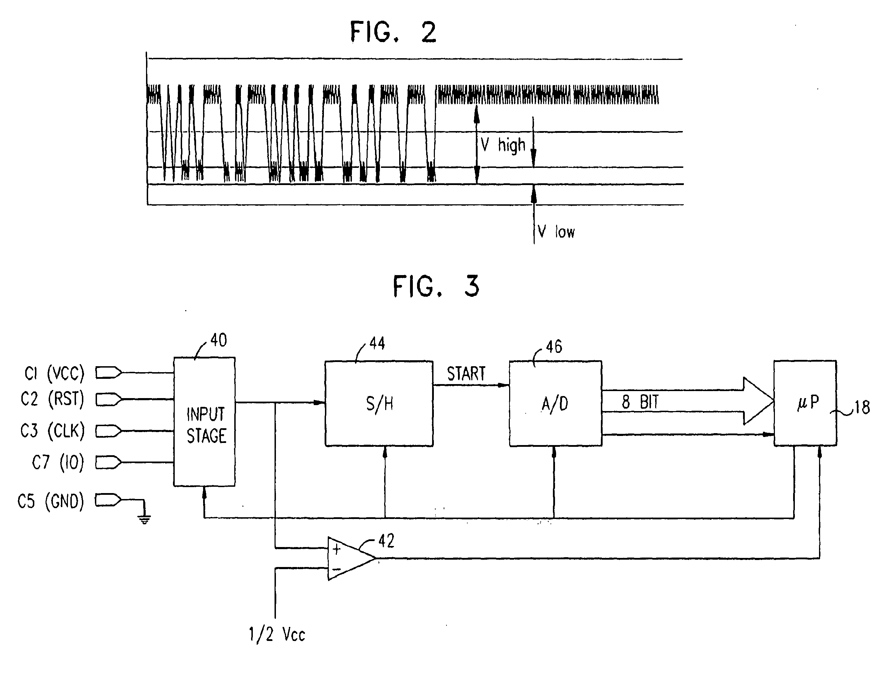

A further example of a feature that can be measured is shown in figure 2. Figure 2 is a schematic version of the output of an oscilloscope connected to the I/O line of the IRD 10. A typical specification may require the high level to be between 3.8V and Vcc. The low output may be specified as lying between 0V and 0.5V.

Figure 3 is a block diagram showing circuitry that may typically be used to measure the high and low levels of the I/O line. An input stage 40 receives a series of signals C1, C2, C3, and C7. A comparator 42 decides whether the output of the input stage 40 is a high or a low signal by comparing the output with a reference signal set to 1/2 Vcc. S/H device 44 then measures the amplitude of the signal and the output thereof is converted into a digital signal by A/D converter 46, which digital signal is passed to the microprocessor 18.

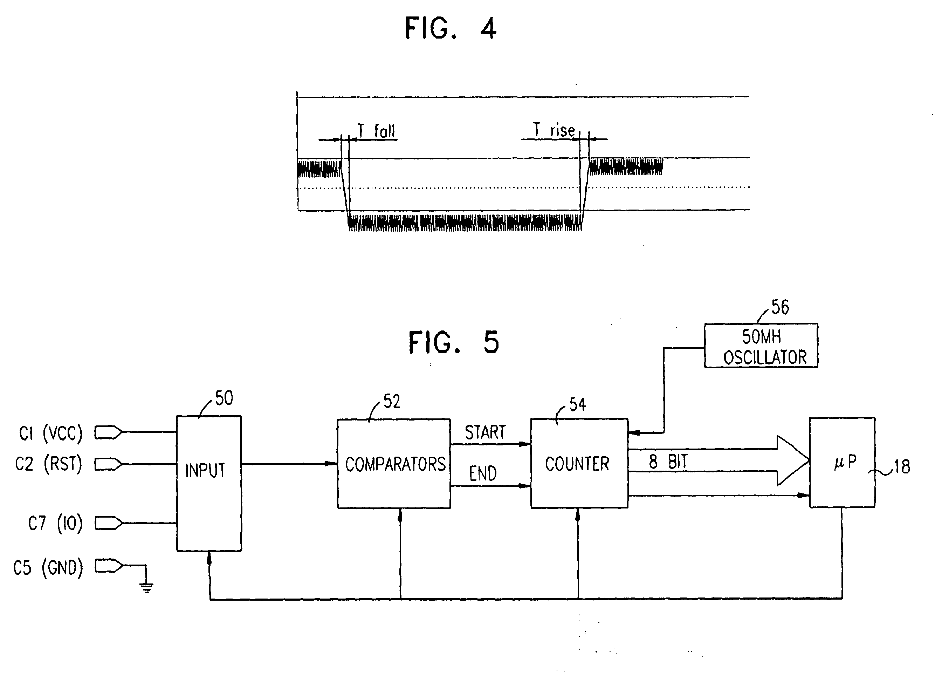

A third example of a parameter that may be measured is the rise/fall time of the same signal. An oscillogram of this parameter is shown in figure 4. This is required by the various specifications to be typically below 0.1 µs. The feature may be measured by the circuitry shown in figure 5. A series of signals C1, C2, and C7 are received by an input stage 50. The microprocessor 18 chooses which of the input signals to measure. A comparator 52 watches for a high signal to fall 10%, (or for a low signal to rise by 10%) and then a counter 54 is started. The counter 54 continues to run until the comparator 52 notifies it that the signal has fallen (risen) to 90%. The final output of the counter is output to the microprocessor. An oscillator 56 provides a timing signal for the counter.

In accordance with embodiments of the present invention it is thus possible to provide a worst case smartcard and to test for general compatibility of the device with the card simply by slotting the card into the device and operating the device in the normal way. No expensive laboratory equipment is needed and the time taken for each measurement is not excessive.

The foregoing description is given by way of example only. The scope of protection is defined by the appended claims.

It is appreciated that the various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

## Claims

1. A test device for testing a smart card interface comprising:
a smart card front end (28) configured for insertion into a smart card interface;
a smart card input/output pad (16) disposed on said smart card front end (28) configured for interfacing with a smart card interface;
a smart card chip (14) electronically connected to said smart card input/output pad (16),
**characterised in that** said smart card chip (14) is configured for performing a smart card interaction mimicking a smart card to be used with a particular smart card interface, said smart card interaction including receiving a response from a smart card interface; and
a measurement and processing arrangement (18, 20) configured for:
determining a measurement of said response from a smart card interface; and
comparing said measurement to specified design parameters of a smart card interface.

2. The device according to claim 1, wherein said measurement and processing arrangement is configured for terminating said smart card interaction between said smart card chip (14) and the smart card interface when said measurement lies outside of the specified design parameters.

3. The device according to claim 1 or 2, wherein said measurement is a measurement of at least one of a high level and a low level of said response.

4. The device according to any of claims 1 to 3, wherein said measurement is a measurement of at least one of a rise time and a fall time of said response.

5. The device according to any of claims 1 to 4, further comprising a display (22) for displaying information indicative of the result of comparing said measurement to said specified design parameters.

6. The device according to claim 5, wherein said display (22) is configured for indicating at least one of success and failure of the smart card interface to operate within the specified design parameters.

7. The device according to claim 5 or claim 6, wherein said display (22) includes at least one light emitting diode.

8. The device according to any one preceding claim, further comprising an output interface (26) operationally connected to said measurement and processing arrangement (18, 20), said output interface (26) being configured for outputting the result of said comparing to a computer.

9. A method for testing a smart card interface with a test device, the test device having a smart card chip, the method comprising the steps of:
inserting the test device into the smart card interface;
**characterised by** performing a smart card interaction with the smart card interface, said smart card interaction including receiving a response from the smart card interface;
determining a measurement of said response;
comparing said measurement to the specified design parameters of the smart card interface; and
performing an action based on a result of said comparing.

## Patentansprüche

1. Testeinrichtung zum Testen einer Smartkarten-Schnittstelle, umfassend:
ein Smartkarten-Frontend (28), welches konfiguriert ist für eine Einfügung in eine Smartkarten-Schnittstelle;
einen Smartkarten-Eingangs-/Ausgangs-Anschlussflecken (16), der auf dem Smartkarten-Frontend (28) angeordnet ist, konfiguriert für eine Kopplung mit der Smartkarten-Schnittstelle;
einen Smartkarten-Chip (14), der elektronisch mit dem Smartkarten-Eingangs-/Ausgangs-Anschlussflecken (16) verbunden ist;
**dadurch gekennzeichnet, dass** der Smartkarten-Chip (14) konfiguriert ist zum Ausführen einer Smartkarten-Interaktion, die eine Smartkarte simuliert, die mit einer bestimmten Smartkarten-Schnittstelle verwendet werden soll, wobei die Smartkarten-Interaktion das Empfangen einer Antwort von einer Smartkarten-Schnittstelle einschließt; und
eine Mess- und Verarbeitungsanordnung (18, 20), konfiguriert zum:
Bestimmen einer Messung der Antwort von einer Smartkarten-Schnittstelle; und
Vergleichen der Messung mit spezifizierten Entwurfparametern einer Smartkarten-Schnittstelle.

2. Einrichtung nach Anspruch 1, wobei die Mess- und Verarbeitungsanordnung konfiguriert ist zum Beenden der Smartkarten-Interaktion zwischen dem Smartkarten-Chip (14) und der Smartkarten-Schnittstelle, wenn die Messung außerhalb der spezifizierten Entwurfparameter liegt.

3. Einrichtung nach Anspruch 1 oder 2, wobei die Messung eine Messung von wenigstens einem hohen Pegel und einem niedrigen Pegel der Antwort ist.

4. Einrichtung nach irgendeinem der Ansprüche 1 bis 3, wobei die Messung eine Messung von wenigstens einer Anstiegszeit und/oder einer Abfallzeit der Antwort ist.

5. Einrichtung nach irgendeinem der Ansprüche 1 bis 4, ferner umfassend eine Anzeige (22) zum Anzeigen von Information, die das Ergebnis eines Vergleichs der Messung mit den spezifizierten Entwurfsparametem anzeigt.

6. Einrichtung nach Anspruch 5, wobei die Anzeige (22) konfiguriert ist zum Anzeigen wenigstens eines Erfolgs und/oder eines Fehlschlags der Smartkarten-Schnittstelle, um innerhalb der spezifizierten Entwurfparameter zu arbeiten.

7. Einrichtung nach Anspruch 5 oder Anspruch 6, wobei die Anzeige (22) wenigstens eine Leuchtdiode einschließt.

8. Einrichtung nach irgendeinem vorangehenden Anspruch, ferner umfassend eine Ausgangs-Schnittstelle (26), die betriebsmäßig verbunden ist mit der Mess- und Verarbeitungsanordnung (18, 20), wobei die Ausgangsschnittstelle (26) konfiguriert ist zum Ausgeben des Ergebnisses des Vergleichs an einen Computer.

9. Verfahren zum Testen einer Smartkarten-Schnittstelle mit einer Testeinrichtung, wobei die Testeinrichtung einen Smartkarten-Chip aufweist, wobei das Verfahren die folgenden Schritte umfasst:
Einfügen der Testeinrichtung in die Smartkarten-Schnittstelle;
**gekennzeichnet durch** ein Ausführen einer Smartkarten-Interaktion mit der Smartkarten-Schnittstelle, wobei die Smartkarten-Interaktion den Empfang einer Antwort von der Smartkarten-Schnittstelle einschließt;
Bestimmen einer Messung der Antwort;
Vergleichen der Messung mit den spezifizierten Entwurfsparametern der Smartkarten-Schnittstelle; und
Ausführen einer Aktion auf Grundlage des Ergebnisses des Vergleichs.

## Revendications

1. Dispositif de test pour tester une interface de carte à puce comprenant:
une extrémité avant de carte à puce (28) configurée pour l'insertion dans une interface de carte à puce;
une plage de connexion d'entrée/sortie de carte à puce (16) disposée sur ladite extrémité avant de carte à puce (28) configurée pour l'interfaçage avec une interface de carte à puce;
une puce de carte à puce (14) raccordée électroniquement à ladite plage de connexion d'entrée/sortie de carte à puce (16);
**caractérisé en ce que** ladite puce de carte à puce (14) est configurée pour réaliser une interaction de carte à puce imitant une carte à puce à utiliser avec une interface de carte à puce particulière, ladite interaction de carte à puce comprenant la réception d'une réponse à partir d'une interface de carte à puce; et
une disposition de mesure de traitement (18, 20) configurée pour:
déterminer une mesure de ladite réponse à partir d'une interface de carte à puce; et
comparaison de ladite mesure à des paramètres de conception spécifiés d'une interface de carte à puce.

2. Dispositif selon la revendication 1, dans lequel ladite mesure et la disposition de traitement sont configurées pour terminer ladite interaction de carte à puce entre ladite puce de carte à puce (14) et l'interface de carte à puce lorsque ladite mesure se trouve en dehors desdits paramètres de conception spécifiés.

3. Dispositif selon la revendication 1 ou 2, dans lequel ladite mesure est une mesure d'au moins un d'un niveau élevé et d'un niveau bas de ladite réponse.

4. Dispositif selon l'une quelconque des revendications 1 à 3, dans lequel ladite mesure est une mesure d'au moins un d'un temps de montée et d'un temps de descente de ladite réponse.

5. Dispositif selon l'une quelconque des revendications 1 à 4, comprenant en outre un affichage (22) pour afficher des informations indicatrices du résultat de comparaison de ladite mesure auxdits paramètres de conception spécifiés.

6. Dispositif selon la revendication 5, dans lequel ledit affichage (22) est configuré pour indiquer au moins un de la réussite et de l'échec de l'interface de carte à puce pour fonctionner dans les paramètres de conception spécifiés.

7. Dispositif selon la revendication 5 ou la revendication 6, dans lequel ledit affichage (22) comprend au moins une diode électroluminescente.

8. Dispositif selon l'une quelconque des revendications précédentes, comprenant en outre une interface de sortie (26) raccordée fonctionnellement à ladite disposition de mesure et de traitement (18, 20), ladite interface de sortie (26) étant configurée pour fournir les résultats de ladite comparaison à un ordinateur.

9. Procédé pour tester une interface de carte à puce avec un dispositif de test, le dispositif de test ayant une puce de carte à puce, le procédé comprenant les étapes de:
insertion du dispositif de test dans l'interface de carte à puce;
**caractérisé par** la réalisation d'une interaction de carte à puce avec l'interface de carte à puce, ladite interaction de carte à puce comprenant la réception d'une réponse à partir de l'interface de carte à puce;
détermination d'une mesure de ladite réponse;
comparaison de ladite mesure auxdits paramètres de conception spécifiés de l'interface de carte à puce; et
réalisation d'une action sur la base du résultat de ladite comparaison.
